# EUROPEAN PATENT APPLICATION

(11) **EP 2 157 728 A2**
(43) Date of publication of application: **24.02.2010**
(21) Application number: 09004203.7
(22) Date of filing: 24.03.2009
(51) Int. Cl.: H04L 12/14, H04W 4/24, H04L 29/06

(54) **AAA server anchored diameter online charging continuity**

(30) Priority: 24.03.2008 CN 200810087208
(71) Applicant: Nokia Siemens Networks OY, 02610 Espoo (FI)
(72) Inventor: Zhou, Wei Hua, Haidian District 100081 Beijing (CN)

(57) **Abstract**

The invention relates to a method and system for maintaining continuity of AAA server anchored online charging, wherein message between the PPC and PPS is forwarded by the AAA server. Said method comprises the steps of a) when the subscriber moves, PPC relocation is initiated between the old PPC and the new PPC, and the MS re-authentication is performed in the new PPC; b) after a successful re-authentication, the context information of the old online charging session is transmitted from the old PPC to the new PPC; c) upon completion of the context information transmission, the old PPC transmits CCR message indicating the status of the session to the AAA server and the PPA requests a quota from the PPS through the new PPC.

## Description

### Technical Field

The present invention relates to a mobility processing method involving the relocation of a prepayment client terminal and, particularly, to a method and a system for maintaining online charging continuity with an authentication, authorization, accounting (AAA) server as an anchor point.

### Background Art

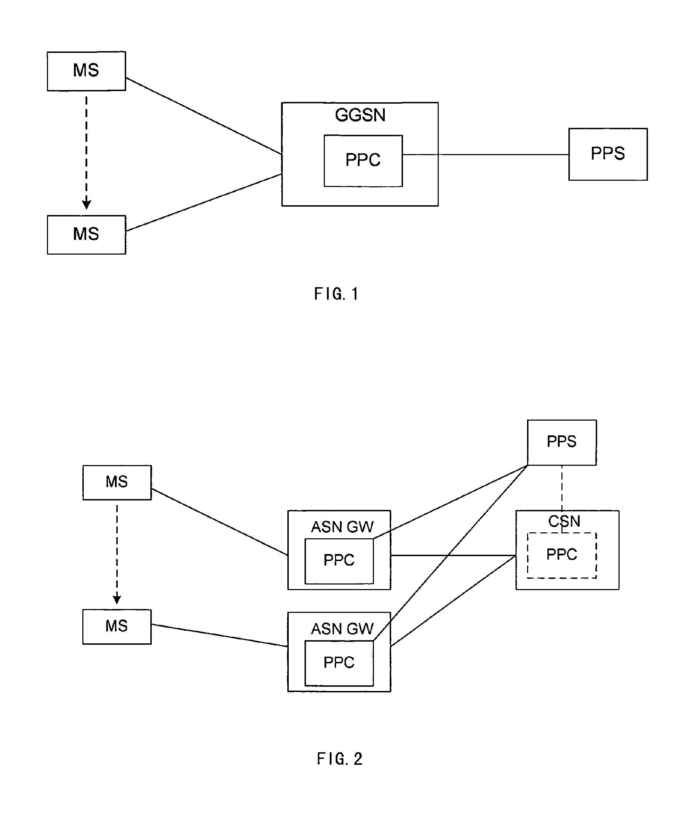

Diameter Credit Control Application (DCCA) is a control protocol for online charging, which was designed by the Internet Engineering Task Force (IETF) and expanded by the 3rd Generation Partnership Project (3GPP). DCCA is based on a client terminal (prepayment client terminal, PPC)/server (prepayment server, PPS) mode. In DCCA, a PPC is designed to be located in the same network unit as an anchor point. When a user moves within a 3G network, since the anchor point of a GPRS gateway-supported node does not change, the PPC will not change. Therefore, it is not necessary to consider the issue of mobility while using such network architecture for charging, as shown in Fig. 1.

However, as the network becomes more and more flat, some online charging functions have been transferred to, for example, access points of an Access Service Network Gateway of a WiMAX network (ASN GW) instead of focusing only on anchor points, as shown in Fig. 2, which shows a Diameter online charging architecture in a WiMAX network. When a user is moving, the mobile station (MS) may move from one ASN GW/PPC to another ASN GW/PPC. In this case, the prepayment client terminal should be relocated, and also the charging continuity should be maintained to support the continuity of a user session. The current DCCA is obviously not capable of solving this problem.

In Chinese patent application No. 200810003790.3, filed on January 23, 2008 by the present applicant, the case has been discussed in which a PPC is directly connected to a PPS, and the content of that patent application is incorporated herein by reference. However, that patent application merely aims at the case in which a PPC is directly connected to a PPS. As to the case in which a PPC is connected to a PPS via an AAA server, that is to say in which an AAA server is used as a mobile anchor point, there has been no solution available up to now.

### Contents of the Invention

A task for the present invention is to propose a method for maintaining online charging continuity with an AAA server as anchor point, so as to solve the problem of maintaining continuity of online charging when a PPC is connected to a PPS via an AAA server.

According to one aspect of the present invention, a method for maintaining online charging continuity with an AAA server as an anchor point is provided to forward messages between the PPC and the PPS via the AAA server. The method comprises the steps of:
a) when a user moves, a PPC relocation is initiated between the old PPC and a new PPC, and a mobile station re-authentication is performed in the new PPC;
b) after the completion of a successful re-authentication, the context information of an old online charging session is transmitted from the old PPC to the new PPC; and
c) upon the completion of the context information transmission, the old PPC transmits a credit control request message indicating the status of the session to the AAA server, and a prepayment proxy requests a quota from the PPS via the new PPC.

In the method, the online charging shares a session with the authentication and authorization or occupies an independent session. Moreover, the session between the AAA server and the PPS will not be affected by the relocation of the PPC.

Attribute value pairs about the session status are defined in the credit control request message. Said attribute value pairs can be defined as "Session-Continue" and "Beginning_of_Session". In which case, the value "True" of "Session-Continue" means that the session will be continued as another new session from the new PPC. The value "False" of "Session-Continue" or the absence of the attribute value pair means that this session shall be terminated. While the value "False" of "Beginning_of_Session" means that the session is a continuation of the session from the old PPC. The value "True" of "Beginning_of_Session" or the absence of the attribute value pair means that the session is a new session.

The relocation of the PPC can be accomplished in a push or pull mode between the old PPC and the new PPC.Furthermore, the re-authentication of the mobile station can comprise an extended authentication protocol stage and a PKMv2 3WHS stage.

After the detection that the re-authentication process has been successfully completed, the new PPC initializes a R4 relocation to accomplish a transaction process. The transaction process accomplished by the R4 relocation comprises:the new PPC informs the old PPC about the successful completion of re-authentication process by sending a Relocation_Complete_Req message; and the old PPC responds with a Relocation_Complete_Rsp message; and the old PPC deletes the mobile station context upon receiving the Relocation_Complete_Ack message. In which case, the new PPC sets an "online charging context" bit in the context objective indicators to indicate requesting the context of the old prepayment client terminal. Furthermore, the relocation_finish_respond message provides a mobile station context including the context of the old PPC.

Before the prepayment proxy requests a new quota from the PPS via the new PPC, the new PPC transmits a context report message to the prepayment proxy, so as to use the location/identification of the new PPC to update the prepayment proxy.

The online charging session in the present invention can be a Diameter online charging session or a Radius online charging session. Furthermore, the method of the present invention can be used in a WiMAX network or a network such as an LTE/SAE network, etc.

According to another aspect of the present invention, it also provides a system for maintaining online charging continuity with an AAA server as an anchor point, wherein messages between the PPC and PPS are forwarded via the AAA server. The system further comprises: relocating means for initiating a relocation of a PPC, context information transmitting means for transmitting the context information of the old online charging session from the old PPC to the new PPC; credit control request message transmitting means for transmitting the credit control request message indicating the status of the session from the old PPC to the AAA server; and quota requesting means for requesting a quota from the PPS via the new PPC.

The method of the present invention has the following advantages:
the PPS does not know the movement of the PPC, and therefore there is no new requirement to the PPS;
it is easy for the AAA server to support the forwarding of the DCCA message, therefore, it is easy to implement the solution of the present invention;
the message exchange between the PPC and PPS is eliminated; and
the online charging architecture is simplified, because there is no need for the PPC to know the address of the PPS, that is to say the complexity is reduced by way of the AAA server.

### Description of the Drawings

The present invention will be described hereinbelow in detail in combination with the drawings, wherein:
Fig. 1 shows a Diameter online charging architecture;
Fig. 2 shows a Diameter online charging architecture in a WiMAX network;
Fig. 3 shows a relocation solution of the PPC used in the method of the present invention, aiming at Diameter protocol-based online charging and with an AAA server as an anchor point; and
Fig. 4 shows a relocation process of the PPC aiming at the solution as illustrated in Fig. 3.

### Particular Embodiments

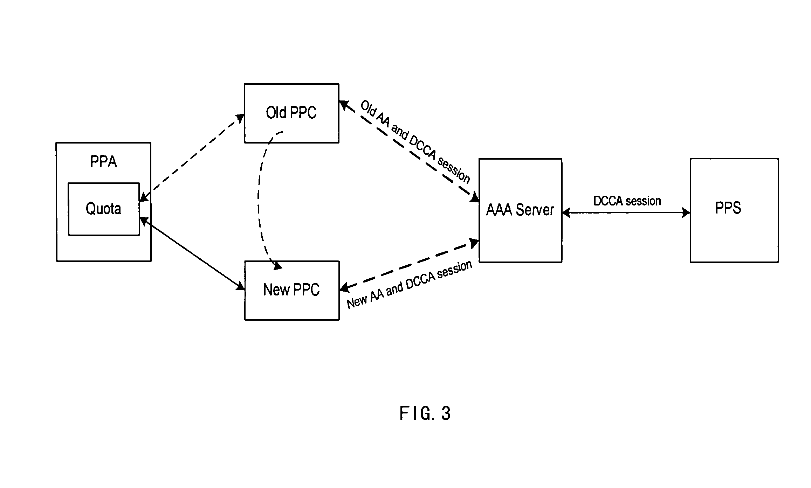

Aiming at WiMAX, a solution is proposed herein for the relocation of a PPC as shown in Fig. 3, for use in a method of the present invention based on Diameter protocol, for online charging with an AAA server as an anchor point:
1. A DCCA message is forwarded between the PPC and PPS via an AAA server.
2. The online charging shares a Diameter session with the authentication and authorization or occupies an independent Diameter session.
3. After a successful relocation by an authenticator, the context information in the DCCA is transmitted from the old PPC to a new PPC. Furthermore, when the transmission of the context information is completed, the old PPS will send a credit control request CCR (terminate, Session-Continue = "True") message to the AAA server, so as to indicate that the session will be continued as a new session from the new PPC.
   With respect to the session status, two new attribute value pairs AVPs are defined, which are used in the CCR message to indicate the session status. One of the AVPs is "Session-Continue", and its value is "True" or "False". The value "True" means that the session will be continued as a new session from the new PPC. The value "False" or the absence of this AVP means that this session should be terminated.
   The other AVP is "Beginning_of_Session", and its value is "True" or "False". The value "False" means that the session is a continuation of a previous session of the user. The value "True" or the absence of the AVP means that the session is a new session.
4. The new online charging can also share a Diameter session with the authentication and authorization, or occupies an independent Diameter session.
5. When a preset threshold of remaining quota is reached or the quota has been used up, the prepayment proxy will start requesting a quota from the PPS via the new PPC. The initial CCR message from the new PPC to the AAA server should be a CCR (update, Beginning_of_Session = False), so as to indicate that the session is a continuation of a previous session of the user.
6. The DCCA session between the AAA server and the PPS is not affected by the relocation of the PPC.

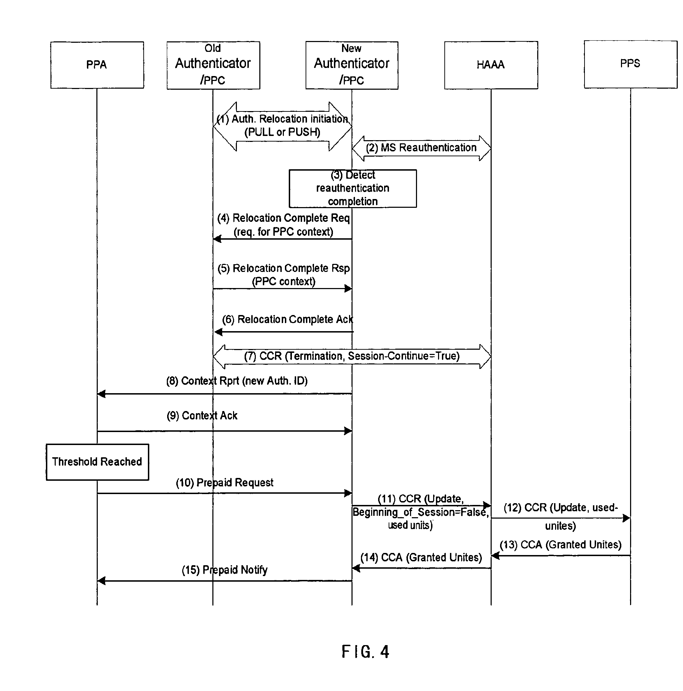

With respect to this solution, Fig. 4 shows the detailed process of the relocation of a PPC. At step 1, an authenticator relocation is initialized between the old authenticator/PPC and the new authenticator/PPC, which can be accomplished in a push or pull mode. At step 2, the re-authentication of the mobile station is performed in the new authenticator entity. This includes an extensible authentication protocol (EAP) stage and a PKMv2 3WHS stage. At step 3, if the new authenticator/PPC detects that the re-authentication process has been successfully completed (the PKMv2 3WHS stage has been successfully completed), the new authenticator/PPC initializes the R4 relocation to complete the transaction process. The R4 relocation to complete the transaction process comprises the following steps 4, 5 and 6. At step 4, by transmitting a relocation_finish_respond message, the new authenticator/PPC informs the old authenticator/PPC of the successful completion of the re-authentication process. The new authenticator/PPC sets the "online charging context" bit in the context objective indicator TLV to indicate the request for the context of the old authenticator/PPC. At step 5, the old authenticator/PPC responds with a relocation_finish_respond message, and the relocation_finish_respond message provides the mobile station context including the context of the old authenticator/PPC. At step 6, the new authenticator/PPC confirms having received the relocation_finish_respond message by transmitting a relocation_finish_confirm message. When the old authenticator/PPC receives the message, the old authenticator/PPC can delete the mobile station context. At step 7, the old authenticator/PPC generates a CCR (the "Session-Continue" label is set as "True") aiming at a previous charging period. At step 8, the new authenticator/PPC sends a context report message to an anchor point DP/prepayment proxy, so as to update the anchor point DP/prepayment proxy using the new authenticator's location/identity. From this time, the prepayment proxy will communicate with the new PPC. At step 9, the prepayment proxy responds with the context confirmation message. At step 10, when the preset threshold of the remaining quota is reached or the quota has been used up, the prepayment proxy will send a prepayment request message to the new PPC to request a further quota. At step 11, the new PPC generates a CCR (update, Beginning_of_Session = False, having used the quota) message for the AAA server. At step 12, the AAA server forwards the CCR (update, having used the quota) message to the PPS via the original DCCA session. At step 13, the PPS returns the credit control affirmation CCA (having being allocated a quota) message to the AAA server. At step 14, the AAA server also returns the CCA (having being allocated a quota) message to the new authenticator/PPC. At step 15, the new authenticator/PPC responds to the prepayment proxy with a prepayment informing message.

The various steps in the above process can be accomplished by using software or hardware.

The architecture of prepayment accounting of the present invention is consistent with the architecture of Radius protocol-based prepayment accounting in WiMAX R1.0. When Radius protocol and Diameter protocol are used for authentication and authorization, they both can employ the method of the present invention.

Although the present invention is described above by taking a WiMAX network as an example in combination with the drawings, apparently the present invention is not limited as such, and it can be modified in many ways within the scope of the appended claims.

## Claims

1. A method for maintaining continuity of AAA server anchored online charging, wherein message between the PPC and PPS is forwarded by the AAA server, said method comprises the steps of
a) when the subscriber moves, PPC relocation is initiated between the old PPC and the new PPC, and the MS re-authentication is performed in the new PPC;
b) after a successful re-authentication, the context information of the old online charging session is transmitted from the old PPC to the new PPC;
c) upon completion of the context information transmission, the old PPC transmits CCR message indicating the status of the session to the AAA server and the PPA requests a quota from the PPS through the new PPC.

2. The method according to claim 1, **characterized in that** the session between the AAA server and the PPS is irrelevant to the relocation of the PPC.

3. The method according to claim 1, **characterized in that** the online charging and authentication and authorization can share one session or have independent sessions.

4. The method according to claim 1, **characterized in that** AVPs about the session status are defined in the CCR message.

5. The method according to claim 4, **characterized in that** the AVPs are defined as Session-Continue and Beginning_of_Session.

6. The method according to claim 5, **characterized in that** the value of True of Session-Continue indicates that the session will be continued as another new session from the new PPC, and the value of False of Session-Continue or absence of this AVP indicates that this session shall be terminated.

7. The method according to claim 5, **characterized in that** the value of False of Beginning_of_Session indicates that the session is a continuation of the session from the old PPC, and the value of True of Beginning_of_Session or absence of this AVP indicates that the session is a new session.

8. The method according to any one of claims 1-7, **characterized in that** relocation of PPC is realized between the old PPC and the new PPC in Pull or Push modes.

9. The method according to any one of claims 1-7, **characterized in that** re-authentication of the MS includes EAP phase and PKMv2 3WHS phase.

10. The method according to any one of claims 1-7, **characterized in that** the new PPC initiates R4 Relocation Completion transaction upon detections of a successful completion of re-authentication process.

11. The method according to claim 10, **characterized in that** the new PPC informs the old PPC about the successful completion of re-authentication process by sending a Relocation_Complete_Req message; and the old PPC responds with a Relocation_Complete_Rsp message; and the old PPC deletes the MS context upon receiving the Relocation_Complete_Ack message.

12. The method according to claim 10, **characterized in that** the new PPC sets "Online Accounting context" bit in the Context Purpose Indicator to indicate the request for the old PPC context.

13. The method according to claim 10, **characterized in that** the Relocation_Complete_Rsp message provides the MS context including the old PPC context.

14. The method according to any one of claims 1-7, **characterized in that** before the PPA requests a quota from the PPS through the new PPC, the new PPC sends the context-report message to the PPA to update said PPA with the new PPC location/identity.

15. The method according to any one of claims 1-7, **characterized in that** the online charging session is a Diameter online charging session or a Radius online charging session.

16. The method according to any one of claims 1-7, **characterized in that** online charging is performed in the WiMAX network or the LTE/SAE network.

17. A system for maintaining continuity of AAA server anchored online charging, wherein message between the PPC and PPS is forwarded by the AAA server, said system comprises:
a relocation means for initiating a relocation of the PPC;
a context information transmitting means for transmitting the context information of the old online charging session from the old PPC to the new PPC;
a CCR message transmitting means for transmitting the CCR message indicating the status of the session from the old PPC to the AAA server; and
a quota requesting means for requesting quota from the PPS through the new PPC.
